# EUROPEAN PATENT APPLICATION

(11) **EP 3 587 734 A1**
(43) Date of publication of application: **01.01.2020**
(21) Application number: 19181025.8
(22) Date of filing: 18.06.2019
(51) Int. Cl.: F01D 5/18, F01D 9/06, F23R 3/00

(54) **COOLING ARRANGEMENT WITH CRENELLATION FEATURES FOR GAS TURBINE ENGINE COMPONENT**

(30) Priority: 21.06.2018 US 201816014467
(71) Applicant: United Technologies Corporation, Farmington, CT 06032 (US)
(72) Inventor: XU, JinQuan, East Greenwich, RI 02818 (US); LEVASSEUR, Glenn, Colchester, CT 06415 (US)
(74) Representative: Dehns

(57) **Abstract**

A gas turbine engine component (161;261) according to an example of the present disclosure includes, among other things, a wall (162E;261A) between first and second wall surfaces (261B,261C). The wall (261B,261C) defines at least one cooling passage (174;274;374;474;574;674;774) extending between an inlet (176;276) along the first wall surface (261B) and an outlet (178;278;378;478;578;678) along the second wall surface (261C). The outlet (178;278;378;478;578;678) has an upstream edge (278U;378U;478U;578U;678U;778U) and a downstream edge (278D,378D,478D,578D) with respect to a general direction of flow through the at least one cooling passage (174;274;374;474;574;674;774). The wall (162E;261A) defines a plurality of crenellation features (280;380;480;580;680;780) along at least the upstream edge (278U;378U;478U;578U;678U;778U). The upstream edge (278U;378U;478U;578U;678U;778U) has a first profile established by the plurality of crenellation features (280;380;480;580;680;780), and the downstream edge (278D,378D,478D,578D) has a second profile that differs from the first profile. A method of cooling is also disclosed.

## Description

### BACKGROUND

This disclosure relates to cooling for a component of a gas turbine engine.

Gas turbine engines can include a fan for propulsion air and to cool components. The fan also delivers air into a core engine where it is compressed. The compressed air is then delivered into a combustion section, where it is mixed with fuel and ignited. The combustion gas expands downstream over and drives turbine blades. Static vanes are positioned adjacent to the turbine blades to control the flow of the products of combustion. The blades and vanes are subject to extreme heat, and thus cooling schemes are utilized for each.

### SUMMARY

A gas turbine engine component according to an example of the present disclosure includes a wall between first and second wall surfaces. The wall defines at least one cooling passage extending between an inlet along the first wall surface and an outlet along the second wall surface. The outlet has an upstream edge and a downstream edge with respect to a general direction of flow through the at least one cooling passage. The wall defines a plurality of crenellation features along at least the upstream edge. The upstream edge has a first profile established by the plurality of crenellation features, and the downstream edge has a second profile that differs from the first profile.

In an embodiment of the foregoing component, the plurality of crenellation features are dimensioned such that formation of kidney vortices in cooling flow ejected from each respective outlet into a gas path is reduced in operation.

In a further embodiment of any of the foregoing embodiments, the at least one cooling passage defines a passage axis between the inlet and the outlet, and the at least one cooling passage is arranged such that a projection of the passage axis is non-orthogonal to a reference plane defined by a localized region of the second wall surface.

In a further embodiment of any of the foregoing embodiments, the first wall surface is an internal surface of the gas turbine engine component, and the second wall surface is an external surface of the gas turbine engine component.

In a further embodiment of any of the foregoing embodiments, the outlet includes one or more lobes.

In a further embodiment of any of the foregoing embodiments, the gas turbine engine component is an airfoil. The airfoil has an airfoil section extending from a platform. The airfoil section comprises the wall, and the at least one cooling passage has a diffusion section defining the outlet.

In a further embodiment of any of the foregoing embodiments, the plurality of crenellation features are substantially flush with the second wall surface.

In a further embodiment of any of the foregoing embodiments, at least some of the plurality of crenellation features include a body that has a triangular cross section.

In a further embodiment of any of the foregoing embodiments, the plurality of crenellation features are non-uniformly distributed along the upstream edge.

In a further embodiment of any of the foregoing embodiments, the at least one cooling passage has an intermediate section that interconnects the inlet and the outlet, and the intermediate section has a plurality of ridges that extend from the plurality of crenellation features in a direction towards the inlet.

In a further embodiment of any of the foregoing embodiments, the plurality of ridges define a plurality of grooves each extending between opposed ends, and a width of at least some of the plurality of grooves differs between the respective opposed ends.

A gas turbine engine according to an example of the present disclosure includes an array of blades and an array of vanes spaced axially from the array of blades in a gas path, and an array of blade outer air seals (BOAS) arranged about the array of blades to bound the gas path. The array of vanes and the array of BOAS includes an external wall between an internal wall surface and an external wall surface. The internal wall surface bounds an internal cavity. Each of the plurality of cooling passages extend between a respective inlet and a respective outlet, the inlet defined along the internal wall surface and the outlet defined along the external wall surface includes an upstream edge and a downstream edge with respect to a general direction of flow through the respective cooling passage. The external wall defines a plurality of crenellation features along at least the upstream edge. The upstream edge has a first profile established by the plurality of crenellation features, and the downstream edge has a second profile that differs from the first profile.

In a further embodiment of any of the foregoing embodiments, at least one of the array of blades and the array of vanes has an airfoil section extending from a platform. The airfoil section extends in a chordwise direction between a leading edge and a trailing edge, and extends in a thickness direction between a suction side and a pressure side. The external wall defines an external surface contour of the airfoil section.

In a further embodiment of any of the foregoing embodiments, each cooling passage of the plurality of cooling passages defines a passage axis between the inlet and the outlet, and the cooling passage is arranged such that a projection of the passage axis is non-orthogonal to a reference plane defined by a localized region of the external wall surface.

In a further embodiment of any of the foregoing embodiments, the external wall defines a first mate face that establishes an intersegment gap with a second mate face of an adjacent one of the array of blades. The array of vanes or the array of BOAS.

In a further embodiment of any of the foregoing embodiments, the plurality of cooling passages each has an intermediate section that interconnects the respective inlet and outlet, and the intermediate section has a plurality of ridges that extend from the plurality of crenellation features in a direction towards the respective inlet.

A method of cooling a gas turbine engine component according to an example of the present disclosure includes communicating cooling flow from an internal cavity to an inlet of at least one cooling passage. The internal cavity bounded by an external wall of the gas turbine engine component defines an outlet of the at least one cooling passage along an external wall surface of the external wall. The outlet has an upstream edge and a downstream edge with respect to a general direction of the cooling flow through the at least one cooling passage. The external wall defines a plurality of crenellation features along an upstream edge of the outlet. The upstream edge has a first profile established by the plurality of crenellation features, and the downstream edge has a second profile that differs from the first profile. The method includes communicating the cooling flow across the plurality of crenellation features, and ejecting the cooling flow outwardly from the outlet and into a gas path such that formation of kidney vortices in the cooling flow is reduced.

In a further embodiment of any of the foregoing embodiments, the gas turbine engine component is an airfoil. The airfoil has an airfoil section extending from a platform.

In a further embodiment of any of the foregoing embodiments, the at least one cooling passage defines a passage axis between the inlet and the outlet, and the at least one cooling passage is arranged such that a projection of the passage axis is non-orthogonal to a reference plane defined by a localized region of the external wall surface.

In a further embodiment of any of the foregoing embodiments, the at least one cooling passage includes an intermediate section that interconnects the inlet and the outlet. The method includes communicating the cooling flow across a plurality of ridges defined in the intermediate section. The plurality of ridges extend from the plurality of crenellation features in a direction towards the inlet.

The various features and advantages of this invention will become apparent to those skilled in the art from the following detailed description of an embodiment. The drawings that accompany the detailed description can be briefly described as follows.

### BRIEF DESCRIPTION OF THE DRAWINGS

Figure 1 schematically shows a gas turbine engine.
Figure 2 schematically shows an airfoil arrangement for a turbine section.
Figure 3 illustrates a perspective view of an airfoil.
Figure 4 illustrates a sectional view of the airfoil along line 4-4 of Figure 3.
Figure 5 illustrates a perspective view of a vane.
Figure 6 illustrates a sectional view of a gas turbine engine component.
Figure 7 illustrates a plan view of a cooling arrangement including a cooling passage according to an example.
Figure 8 illustrates a sectional view of the cooling passage along line 8-8 of Figure 7.
Figure 9 illustrates an axial view of the cooling passage of Figure 7.
Figure 10 illustrates a plan view of a cooling passage according to another example.
Figure 11 illustrates a plan view of a cooling passage according to yet another example.
Figure 12 illustrates a perspective view of a cooling arrangement including crenellation features according to an example, with portions of a cooling passage shown in phantom.
Figure 13 illustrates a plan view of a cooling passage according to another example.
Figure 14 illustrates an axial view of the cooling passage of Figure 13.
Figure 15 illustrates a plan view of a cooling passage according to another example.

### DETAILED DESCRIPTION

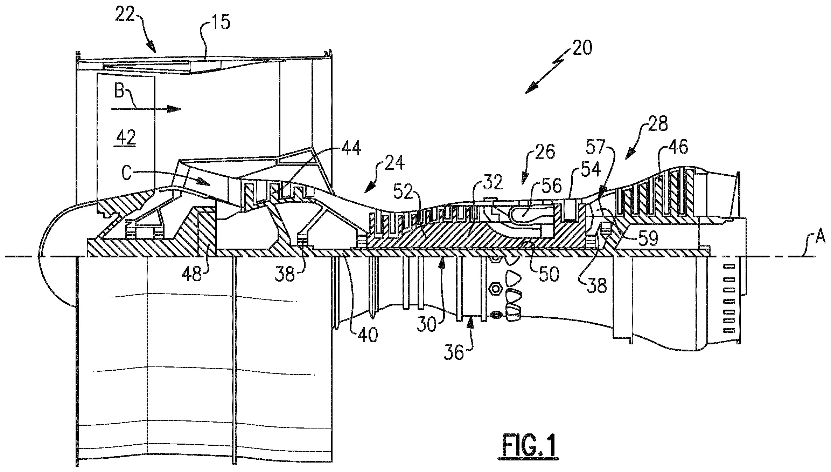

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

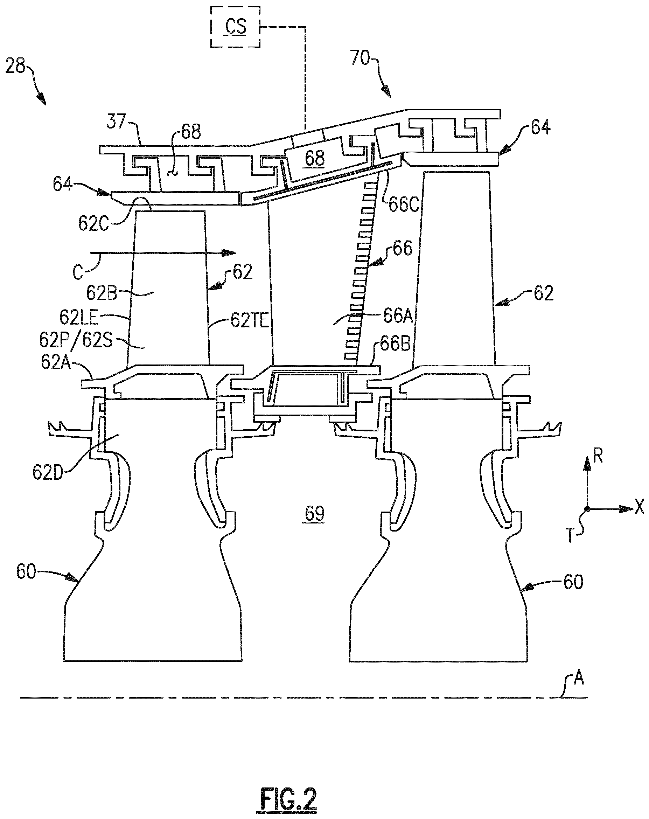

Figure 2 shows selected portions of the turbine section 28 including a rotor 60 carrying one or more blades or airfoils 62 that are rotatable about the engine axis A in a gas path. In this disclosure, like reference numerals designate like elements where appropriate and reference numerals with the addition of one-hundred or multiples thereof designate modified elements that are understood to incorporate the same features and benefits of the corresponding original elements. Each airfoil 62 includes a platform 62A and an airfoil section 62B extending in a spanwise or radial direction R from the platform 62A to a tip 62C. The airfoil section 62B generally extends in a chordwise or axial direction X between a leading edge 62LE and a trailing edge 62TE, and extends in a circumferential or thickness direction T between pressure and suction sides 62P, 62S. A root section 62D of the airfoil 62 is mounted to, or integrally formed with, the rotor 60. A blade outer air seal (BOAS) 64 is spaced radially outward from the tip 62C of the airfoil section 62B. The BOAS 64 can include a plurality of seal arc segments that are circumferentially arranged in an annulus around the engine axis A. An array of the BOAS 64 are distributed about an array of the airfoils 62 to bound a gas path such as the core flow path C.

A vane 66 is positioned along the engine axis A and adjacent to the airfoil 62. The vane 66 is spaced axially from the adjacent airfoil 62. The vane 66 includes an airfoil section 66A extending between an inner platform 66B and an outer platform 66C to define a portion of the core flow path C. The turbine section 28 includes an array of airfoils 62, BOAS 64, and vanes 66 arranged circumferentially about the engine axis A.

The turbine section 28 includes a cooling arrangement 70. The cooling arrangement 70 includes one or more cooling cavities or plenums 68, 69 defined by an engine static structure such as the engine case 37 or another portion of the engine static structure 36 (Figure 1). One or more cooling sources CS (one shown) are configured to provide cooling air to the plenums 68, 69. The plenums 68, 69 are configured to receive pressurized cooling flow from the cooling source(s) CS to cool portions of the airfoil 62, BOAS 64 and/or vane 66. Cooling sources CS can include bleed air from an upstream stage of the compressor section 24 (Figure 1), bypass air, or a secondary cooling system aboard the aircraft, for example. Each of the plenums 68, 69 can extend in a circumferential or thickness direction T between adjacent airfoils 62, BOAS 64 and/or vanes 66. The tips 62C of each of the airfoil sections 62B and adjacent BOAS 64 are in close radial proximity to reduce the amount of gas flow that escapes around the tips 62C through a corresponding clearance gap.

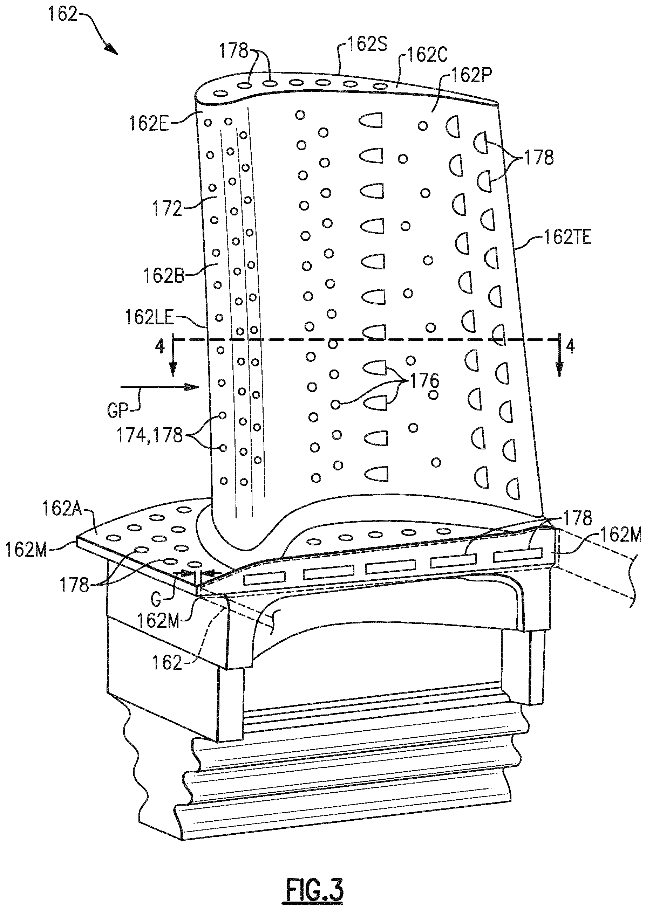

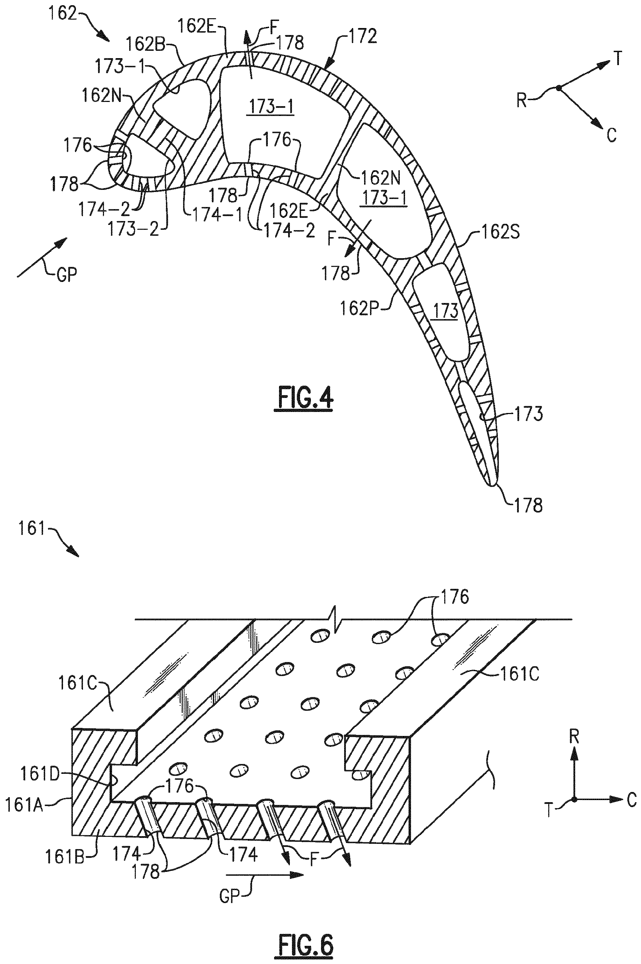

Figures 3-4 illustrate an exemplary blade or airfoil 162. In examples, the airfoil 162 is a turbine blade that can be incorporated into turbine section 28 of Figure 1, for example. The airfoil 162 includes a platform 162A and an airfoil section 162B that extends radially outward from the platform 162A to terminate at a tip 162C. The airfoil 162 includes one or more internal walls 162N (Figure 4) defined within a thickness of the airfoil 162 and external walls 162E. Surfaces along the external walls 162E of the platform 162A and airfoil section 162B establish an external surface contour 172 that interacts with gases in gas path GP during operation of the engine.

The airfoil 162 defines one or more cooling (or internal) cavities 173 in a thickness of the airfoil 162. The cooling cavities 173 can be defined at various locations of the airfoil 162 and at various orientations. One or more cooling cavities 173 can serve as feeding cavities (indicated as 173-1) for receiving cooling flow F from the coolant source CS (Figure 2). One or more cooling cavities 173 can serve as impingement cavities (indicated as 173-2).

The airfoil 162 defines one or more cooling passages 174 for cooling portions of the airfoil 162. At least some of the cooling passages 174 are defined in the internal walls 162N to interconnect adjacent cooling cavities 173. The cooling passages 174 can include crossover passages (indicated as 174-1) and/or film cooling passages (indicated as 174-2). Cooling flow F can be communicated between the feeding cavity 173-1 through one or more of the crossover passages 174-1 to impinge on surfaces of the respective impingement cavity 173-2 to cool adjacent portions of the airfoil 162.

At least some of the cooling passages 174 include outlets 178 defined along external surfaces of the airfoil 162. The external surfaces are defined by external walls 162E of the airfoil 162. The outlets 178 are configured to eject cooling flow F outwardly to provide film cooling to adjacent portions of the airfoil 162. The outlets 178 can be defined at various portions of the airfoil 162 to provide cooling augmentation including along the platform 162A, mate faces 162M, and various portions of the airfoil section 162B, such as along the leading and trailing edge portions 162LE, 162TE, pressure and suction sides 162P, 162S, and/or airfoil tip 162C. Mate faces 162M of adjacent airfoils 162 can establish an intersegment gap G along an interface (mate face 162M of adjacent airfoil 162 shown in dashed lines in Figure 3). Outlets 178 along the mate faces 162M can be arranged to eject cooling flow along the mate faces 162M and into the intersegment gap G to reduce ingestion of hot gases from an adjacent gas path.

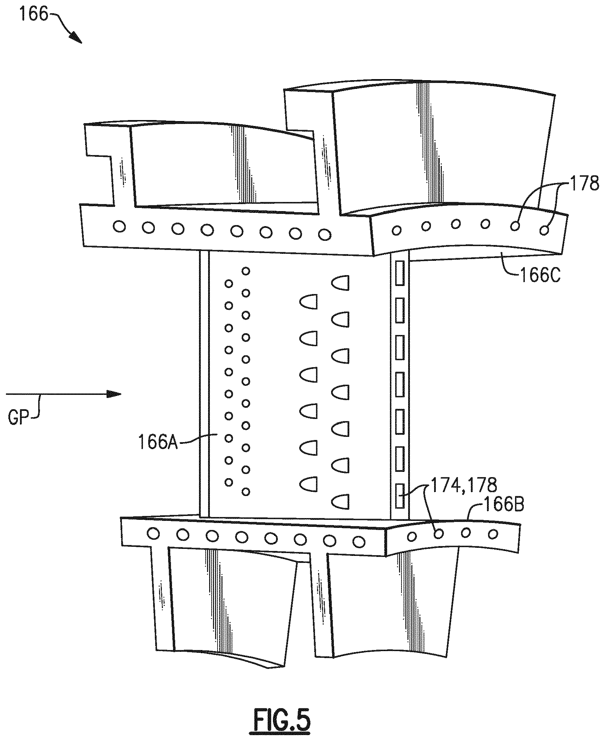

Figure 5 illustrates a vane 166 according to an example. The vane 166 can be a turbine vane incorporated into turbine section 28 or mid-turbine frame 57 of Figure 1, for example. The vane 166 includes an airfoil section 166A extending between platforms 166B, 166C. The vane 166 defines a plurality of cooling passages 174 each including an outlet 178 defined along surfaces of the vane 166. Internal portions of the vane 166 can include one or more cooling cavities and cooling passages (illustrated by the airfoil of Figure 4).

Figure 6 illustrates a sectional view of an exemplary gas turbine engine component 161. The gas turbine engine component 161 can be a combustion liner incorporated into combustor section 26 or a BOAS incorporated into the turbine section 28 of Figure 1, for example. The component 161 includes a wall or main body 161A including a sealing portion 161B and one or more retention features 161C for mounting or otherwise securing the component 161 to a portion of the engine static structure. The main body 161A defines a cavity 161D and one or more cooling passages 174. Each of the cooling passages 174 extend between an inlet 176 and an outlet 178. The cooling passages 174 can be configured to eject cooling flow F from the cavity 161D outwardly into gas path GP to cool adjacent portions of the component 161.

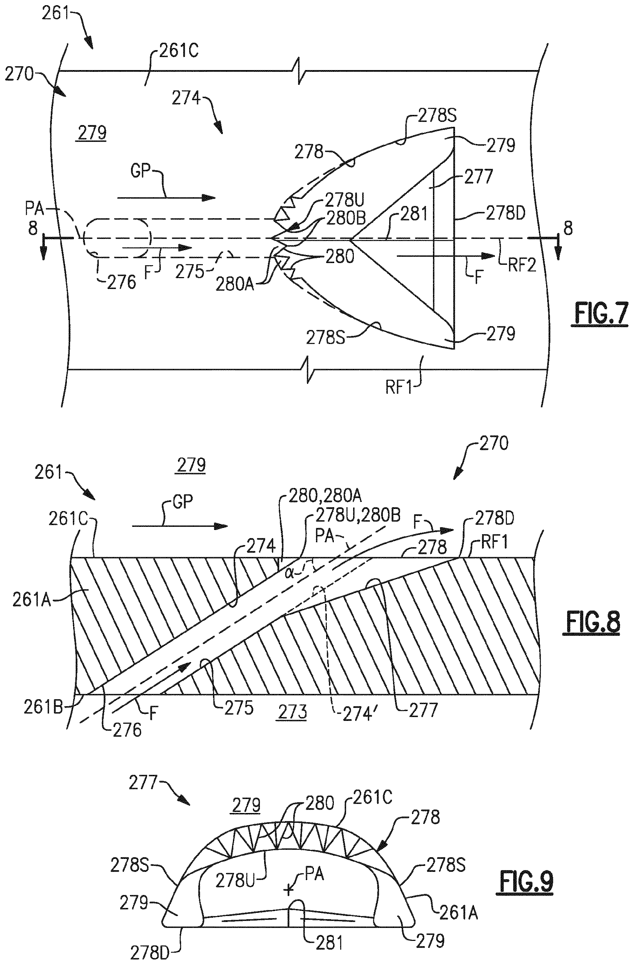

Figures 7-9 illustrate an exemplary gas turbine engine component 261 including a cooling arrangement 270. In some examples, the gas turbine engine component 261 is one of the airfoils 62, BOAS 64, and/or vanes 66 in the turbine section of Figure 2, the airfoil 162 of Figures 3-4, the vane 166 of Figure 5 or the gas turbine engine component 161 of Figure 6. A portion of the platforms 162A, 166B, 166C or airfoil sections 162B, 166A can comprise the wall 261A, for example. Other portions of the engine 20 can benefit from teachings herein, such as the compressor section 24 and other portions of the engine 20 that are subject to elevated temperature conditions during engine operation. Other systems can also benefit from the teachings herein, including ground-based industrial systems.

The component 261 includes a wall 261A between an internal (or first) wall surface 261B and an external (or second) wall surface 261C. The internal wall surface 261B bounds an internal cavity 273 (Figure 8). One or more cooling passages 274 (one shown for illustrative purposes) are defined in the wall 261A for communicating cooling flow F from the internal cavity 273. The cooling passage 274 can be incorporated into any of the cooling passages and components disclosed herein.

The cooling passage 274 extends between an inlet 276 defined along the internal wall surface 261B and an outlet 278 defined along the external wall surface 261C. The cooling passage 274 includes an intermediate section 275 that fluidly interconnects the inlet and outlet 276, 278. The cooling passage 274 is configured to communicate cooling flow F from the inlet 276, through the intermediate section 275, and into the outlet 278. Each inlet 276 and outlet 278 can have various geometries, such as a generally arcuate, elliptical or rectangular geometry.

During operation, the cooling flow F is ejected from the outlet 278 to a region 279. In some examples, the region is another internal cavity 273, with wall 261A being an internal wall or rib that separates two adjacent cavities 273 and with wall surface 261C being an internal wall surface. In the illustrated examples of Figures 7-9, the cooling passage 174 is defined in an external wall of the component 261, with region 279 defined by gas path GP that is external to the component 261. The cooling passage 174 serves as a film cooling hole or passage such that cooling flow F is ejected into the gas path GP to provide cooling to adjacent surfaces of the component 261.

The cooling passage 274 can be arranged at various orientations relative to the wall surface 261C to affect the cooling provided to adjacent portions of the component 261. Each cooling passage 274 defines a passage axis PA that extends longitudinally between the inlet 276 and outlet 278. The passage axis PA can be substantially linear or can have one or more curved components. A localized region of the second wall surface 261C surrounding the outlet 278 defines a reference plane RF1. The reference plane RF1 follows a contour of the second wall surface 261C and is coplanar with the respective outlet 278.

A projection of the passage axis PA intersects the reference plane RF1 to establish an angle α (Figure 8). The angle α can be substantially perpendicular or orthogonal to the reference plane RF1. In other examples, the cooling passage 274 is arranged such that the angle α is transverse or non-orthogonal to the reference plane RF1, which can increase a length of the cooling passage 274 to provide relatively greater cooling augmentation to portions of the component 261 adjacent the intermediate section 275. In the illustrated example of Figure 8, the cooling passage 274 is inclined or slopes from the second wall surface 261C such that the angle α is acute.

The cooling passage 274 includes a diffusion section 277 that extends between the intermediate section 275 and the outlet 278. The diffusion section 277 is dimensioned such that a width of the cooling passage 274 generally increases in a direction along the passage axis PA from the intermediate section 275 to the outlet 278, and such a cross-sectional area of the outlet 278 is greater than a cross-sectional area of the intermediate section 275 to diffuse the cooling flow F prior to being ejected from the outlet 278. In other examples, a cross-sectional area of cooling passage 274' is substantially constant along the passage axis PA such that the cooling passage 274' is free of a diffusion section (illustrated by dashed lines in Figure 8). In some examples, the intermediate section 275 is a metering section having a substantially consistent or decreased cross section area with respect to the inlet 276 that meters cooling flow rate in the cooling passage 274.

In some examples, the diffusion section 277 includes one or more lobes 279 (shown in Figures 7 and 9) that are recessed inwardly from or are flush with walls of the diffusion section 277 of the cooling passage 274. The lobes 279 can be located adjacent to sides 278S of the outlet 278 on opposed sides of a ridge 281, for example, and guide portions of the cooling flow F prior to being ejected from the outlet 278.

A perimeter or rim of the outlet 278 includes an upstream (or first) edge 278U, a downstream (or second) edge 278D, and opposed sides 278S that extend between the upstream and downstream edges 278U, 278D. The upstream and downstream edges 278U, 278D are defined with respect to a general direction of flow F through the cooling passage 274.

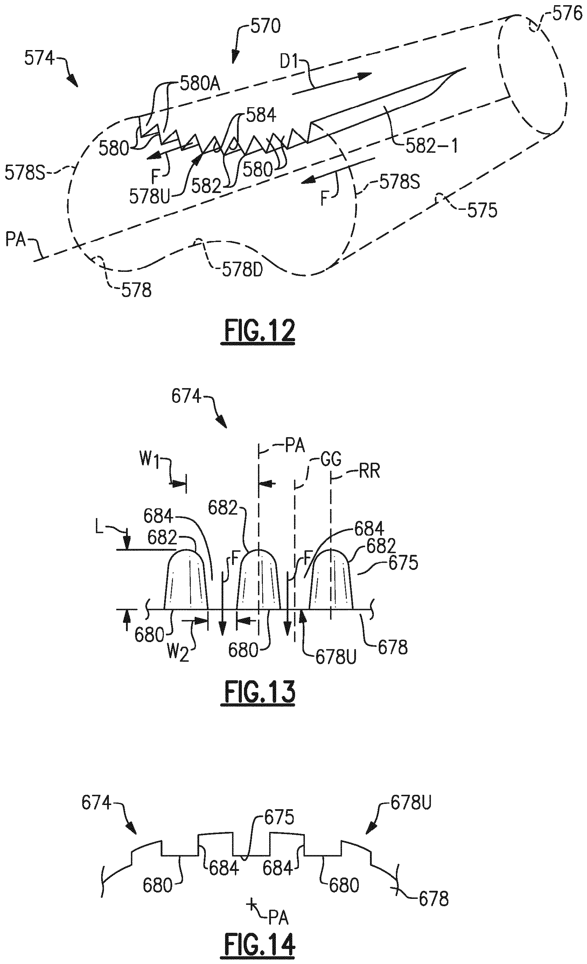

The upstream edge can have a generally convex geometry as illustrated by upstream edge 278U of Figure 9, a generally concave geometry as illustrated by upstream edge 578U of Figure 12, or a substantially flat portion as illustrated by upstream edge 678U of Figure 14. The lobes 279 can extend from the downstream edge 278D in a direction towards the upstream edge 278U.

Interaction of cooling flow ejected from film cooling holes and crossflow in an adjacent gas path can cause formation of "kidney vortices," as is known. The kidney vortices include a counter-rotating vortex pair, which may cause the cooling flow to lift off in an outward direction relative to the component surface due to mutual induction of the vortex pair. The lift off by the vortex pair may cause hot gas entrainment due to relatively hot gases in the gas path flowing outside the vortex pair and towards the component surface, thereby reducing cooling effectiveness of the cooling flow.

Wall(s) 261A of the component 261 define one or more crenellation features 280 dimensioned and arranged such that formation of kidney vortices in the cooling flow F ejected from the outlet 278 into the gas path GP is substantially eliminated or otherwise reduced in operation. The arrangements of the crenulation features disclosed herein discourage formation or reduce the size of kidney vortices, thereby reducing hot gas entrainment and improving cooling effectiveness. For the purposes of this disclosure, the term "crenellation feature" means a surface feature that causes an inflection or discontinuity in the immediately surrounding surface contour sufficient to direct or adjust a direction of flow, but excludes minor surface variations, imperfections and other features that may be formed due to material characteristics or variations in the manufacturing process, for example.

The wall 261A defines a plurality of crenellation features 280 along at least the upstream edge 278U that interact with the cooling flow F communicated in the cooling passage 274. The crenellation features 280 include a body 280A defined by a thickness of the wall 261A. In the illustrated example of Figures 7 and 8, the crenellation features 280 are substantially flush with, and are defined by, the external surface 261C. The body 280A has a component that extends in an axial direction with respect to the passage axis PA towards the downstream edge 278D.

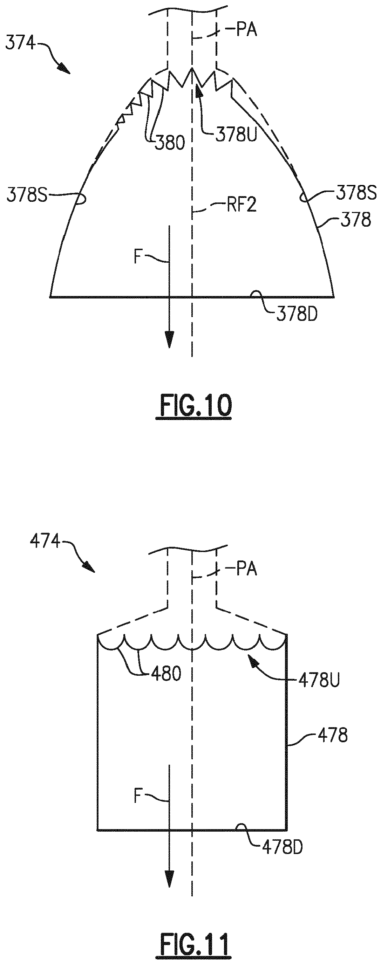

The body 280A extends outwardly from the upstream edge 278U and tapers to a tip 280B such that the crenellation feature 280 has a generally triangular cross-sectional geometry. The crenellation features can include other geometries, such as a generally curved or rounded surface, as illustrated by crenellation features 480 of Figure 11. Each crenellation feature 280 can have the same or a different geometry than the other crenellation features 280 defined along the outlet 278. For example, the crenellation features 280 can vary in size and/or shape.

The crenellation features 280 can be distributed along a length of the upstream edge 278U to reduce formation of kidney vortices, and can be spaced apart from the downstream edge 278D. In the illustrated example of Figure 7, the upstream edge 278U has a first profile established by the crenellation features 280, and the downstream edge 278D has a second profile that differs from the first profile. For example, the second profile of the downstream edge 278 can be substantially free of any crenellation features and can have a substantially linear profile as illustrated by Figure 7. The crenellation features 280 can be uniformly distributed along the upstream edge 278U relative to a reference plane RF2 that extends from the passage axis PA to bisect the upstream edge 278U, as illustrated by Figure 7. In other examples, the crenellation features are non-uniformly distributed along the upstream edge relative to reference plane RF2, as illustrated by crenellation features 380 along upstream edge 378U of Figure 10. Cooling passage 374 includes a greater number of crenellation features 380 on one side of the passage axis PA and a relatively lesser number crenellation features 380 on another side of the passage axis PA.

At least some of the crenellation features 380 can be defined along one or more of the sides 378S, such as along less than half or more narrowly less than a quarter of the distance from the upstream edge 378U to the downstream edge 387D, although an effectiveness of crenellation features 380 in counteracting formation of kidney vortices may be reduced as a distance from the upstream edge 378U to the respective crenellation feature 380 increases.

In operation, cooling flow F is communicated from the internal cavity 273 to the inlet 276, and then through the intermediate section 275. The cooling flow F is then communicated across the crenellation features 280, and is then ejected outwardly from the outlet 278 and into the gas path GP such that formation of kidney vortices in the ejected cooling flow F is reduced.

Figure 12 illustrates a cooling arrangement 570 including cooling passage(s) 574 according to another example. Portions of the cooling passage 574 including inlet 576, outlet 578 and intermediate portion 575 are shown in dash lines for illustrated purposes. A plurality of crenellation features 580 are defined along upstream edge 578U. A body 580A of at least some, or each, crenellation feature 580 extends inwardly from the upstream edge 578U toward passage axis PA to interact with cooling flow F communicated by the intermediate section 575. In the illustrated example of Figure 12, the upstream edge 578U has a first profile established by the crenellation features 580, and the downstream edge 578D has a second profile that differs from the first profile.

The intermediate section 575 includes a plurality of ridges 582 that extend axially in a direction D1 from crenellation features 580 towards inlet 576 with respect to the passage axis PA. The ridges 582 can extend along a top surface of the intermediate section 575 (i.e., relatively closer to an external surface of the component defining the outlet 578). An end of at least some of the ridges 582 opposite to the upstream edge 278U can taper into a wall of the intermediate section 575, as illustrated by ridge 582-1. The ridges 582 define a plurality of grooves 584. The respective sets of ridges and grooves 582, 584 can be substantially parallel to one another and/or are aligned in a streamwise direction with respect to a general direction of the cooling flow F through the intermediate section 575. In operation, cooling flow F from the inlet 576 is communicated across the ridges 582 and through the grooves 584 prior to flowing across the crenellation features 580. The arrangement of ridges 582 and grooves 584 can improve structural integrity of the crenellation features 580 and can improve guiding streamline cooling flow towards the crenellation features 580 during operation.

In the illustrated example of Figures 13 and 14, adjacent crenellation features 680 are spaced apart from each other along upstream edge 678U. The crenellation features 680 can have a generally rectangular cross-section, as illustrated by Figure 14, such that grooves 684 define a plurality of slots.

In some examples, a width of at least some of the grooves differs along a length of the respective groove to meter or diffuse the cooling flow F. In the illustrated example of Figure 13, ridges 682 define grooves 684 each extending between opposed ends to establish a length L. A width of the respective groove 684 differs between the opposed ends. Opposed ends of the respective groove 684 defines widths W1, W2. Width W1 is greater than width W2 such that a width of the groove 684 generally decreases or converges along a length of the groove 684 axially in a direction towards upstream edge 678U. In examples, the ridges 682 are dimensioned such that a ratio of width W1 to length L is greater than about 0.5, such as between 0.5 and 2.0, which can improve guiding the cooling flow F towards the crenellation features 680.

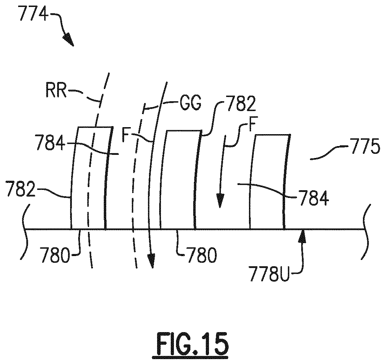

The ridges and grooves can be oriented to direct the cooling flow in the cooling passage. In the illustrated example of Figure 13, each ridge 582 defines a ridge axis RR and each groove 584 defines a groove axis GG. Each of the axes GG, RR can be substantially straight. In other examples, the axes can include one or more curved components. In the illustrated example of Figure 15, axes GG, RR are arcuate such that the ridges 782 curve along a wall of the intermediate section 775 to impart a swirling motion for the cooling flow F communicated through the grooves 784.

Various techniques can be utilized to form the crenellation features disclosed herein, including casting, machining such as electric discharge machining (EDM), additive manufacturing, or a combination thereof. For example, the crenellation features 280 can be formed along the outlet 278 with a relatively low amount of material removal which can reduce manufacturing effort, whereas relatively greater material may be removed or a relatively more complex manufacturing technique (e.g., a relatively complex core geometry) may be used to form the crenellation features 580. However, the crenellation features 580 which extend inwardly towards the passage axis PA may have relatively greater fluid interaction as compared to crenellation features 280. The grooves can be machined or otherwise formed in surfaces of the component to define the ridges such that the ridges follow a contour of surfaces of the intermediate section, as illustrated by the ridges 680 and grooves 684 of Figure 14, for example.

It should be understood that relative positional terms such as "forward," "aft," "upper," "lower," "above," "below," and the like are with reference to the normal operational attitude of the vehicle and should not be considered otherwise limiting.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A gas turbine engine (161;261) component comprising:
a wall (16E;261A) between first and second wall surfaces (261B,261C), the wall (162E;261A) defining at least one cooling passage (174;274;374;474;574;674;774) extending between an inlet (176;276) along the first wall surface (261B) and an outlet (178;278;378;478;578;678) along the second wall surface (261C), the outlet (178;278;378;478;578;678) including an upstream edge (278U;378U;478U;578U;678U;778U) and a downstream edge (278D,378D,478D,578D) with respect to a general direction of flow through the at least one cooling passage (174;274;374;574;674;774); and
wherein the wall (161E,261A) defines a plurality of crenellation features (280;380;480;580;680;780) along at least the upstream edge (278U;378U;478U;578U;678U;778U), the upstream edge (278U;378U;478U;578U;678U;778U) has a first profile established by the plurality of crenellation features (280;380;480;580;680;780), and the downstream edge (278D,378D,478D,578D) has a second profile that differs from the first profile.

2. The gas turbine engine component as recited in claim 1, wherein the plurality of crenellation features (280;380;480;580;680;780) are dimensioned such that formation of kidney vortices in cooling flow ejected from the outlet (178;278;378;478;578;678) into a gas path is reduced in operation.

3. The gas turbine engine component as recited in claim 1 or 2, wherein the at least one cooling passage (174;274;374;474;574;674;774) defines a passage axis (PA) between the inlet (176;276) and the outlet (178;278;378;478;578;678), and the at least one cooling passage (174;274;374;574;674;774) is arranged such that a projection of the passage axis (PA) is non-orthogonal to a reference plane (RF1) defined by a localized region of the second wall surface (261C).

4. The gas turbine engine component as recited in claim 1, 2 or 3, wherein the first wall surface (261B) is an internal surface of the gas turbine engine component (161;261), and the second wall surface (261C) is an external surface of the gas turbine engine component (161;261), and the gas turbine engine component is an airfoil (162), the airfoil (162) including an airfoil section (162B) extending from a platform (162A), the airfoil section (162B) comprises the wall (261A), and the at least one cooling passage (174;274;374;474;574;674;774) includes a diffusion section (277) defining the outlet (178;278;378;478;578;678).

5. The gas turbine engine component as recited in any preceding claim, wherein the outlet (178;278;378;478;578;678) includes one or more lobes (279).

6. The gas turbine engine component as recited in any preceding claim, wherein the plurality of crenellation features (280;380;480;580;680;780) are substantially flush with the second wall surface (261C).

7. The gas turbine engine component as recited in any preceding claim, wherein at least some of the plurality of crenellation features (280;380;580) include a body having a triangular cross section; and
wherein, optionally, the plurality of crenellation features (380) are non-uniformly distributed along the upstream edge (378U).

8. The gas turbine engine component as recited in any preceding claim, wherein the at least one cooling passage includes an intermediate section (575;675) that interconnects the inlet (276) and the outlet (578;678), and the intermediate section (575;675) includes a plurality of ridges (582;682) that extend from the plurality of crenellation features (580;680) in a direction towards the inlet (176;276); and
wherein the plurality of ridges (582;682) define a plurality of grooves (584;684) each extending between opposed ends, and optionally, a width (W₁,W₂) of at least some of the plurality of grooves (684) differs between the respective opposed ends.

9. A gas turbine engine (20) comprising:
an array of blades (62) and an array of vanes (66) spaced axially from the array of blades (62) in a gas path, and an array of blade outer air seals (BOAS) (64) arranged about the array of blades (62) to bound the gas path; and
wherein at least one of the array of blades (62), the array of vanes (66) and the array of BOAS (64) comprises:
an external wall (162E) between an internal wall surface and an external wall surface, the internal wall surface bounding an internal cavity (173);
a plurality of cooling passages (174) defined in the external wall (162E), each of the plurality of cooling passages (174) extending between a respective inlet (176) and a respective outlet (178), the inlet (176) defined along the internal wall surface and the outlet (178) defined along the external wall surface;
wherein the outlet (178) includes an upstream edge (278U;378U;478U;578U;678U;778U) and a downstream edge (278D,378D,478D,578D) with respect to a general direction of flow through the respective cooling passage (174); and
wherein the external wall (162E) defines a plurality of crenellation features (280;380;480;580;680;780) along at least the upstream edge (278U;378U;478U;578U;678U;778U), the upstream edge (278U;378U;478U;578U;678U;778U) has a first profile established by the plurality of crenellation features (280;380;480;580;680;780), and the downstream edge (278D,378D,478D,578D) has a second profile that differs from the first profile.

10. The gas turbine engine as recited in claim 9, wherein at least one of the array of blades (62) and the array of vanes (66) includes an airfoil section (162B) extending from a platform (162A), the airfoil section (162B) extending in a chordwise direction between a leading edge (162LE) and a trailing edge (162TE), and extending in a thickness direction between a suction side (162S) and a pressure side (162P), and the external wall (162E) defines an external surface contour (172) of the airfoil section (162B); and
wherein each cooling passage (174) of the plurality of cooling passages (174) defines a passage axis (PA) between the inlet (176) and the outlet (178), and the cooling passage (174) is arranged such that a projection of the passage axis (PA) is non-orthogonal to a reference plane (RF1) defined by a localized region of the external wall surface (162E).

11. The gas turbine engine as recited in claim 9 or 10, wherein the external wall (162E) defines a first mate face (162M) that establishes an intersegment gap (G) with a second mate face (162M) of an adjacent one of the array of blades (62), the array of vanes (66) or the array of BOAS (64).

12. The gas turbine engine as recited in claim 9, 10 or 11, wherein the plurality of cooling passages (174) each includes an intermediate section (575;675) that interconnects the respective inlet (176) and outlet (178), and the intermediate section (575;675) includes a plurality of ridges (582;682) that extend from the plurality of crenellation features (580;680) in a direction towards the respective inlet (176).

13. A method of cooling a gas turbine engine component (261) comprising:
communicating cooling flow from an internal cavity (173;273) to an inlet (176;276) of at least one cooling passage (174;274;374;474;574;674;774), the internal cavity (173;273) bounded by an external wall (162E;261A) of the gas turbine engine component (261), the external wall (162E;261A) defining an outlet (178;278;378;478;578;678) of the at least one cooling passage (174;274;374;474;574;674;774) along an external wall surface (261C) of the external wall (162E;261A), the outlet (178;278;378;478;578;678) including an upstream edge (278U;378U;478U;578U;678U;778U) and a downstream edge (278D,378D,478D,578D) with respect to a general direction of the cooling flow through the at least one cooling passage (174;274;374;474;574;674;774), and the external wall (162E;261A) defining a plurality of crenellation features (280;380;480;580;680;780) along an upstream edge (278U;378U;478U;578U;678U;778U) of the outlet (178;278;378;478;578;678), the upstream edge (278U;378U;478U;578U;678U;778U) having a first profile established by the plurality of crenellation features (280;380;480;580;680;780), and the downstream edge (278D,378D,478D,578D) having a second profile that differs from the first profile;
communicating the cooling flow across the plurality of crenellation features (280;380;480;580;680;780); and
ejecting the cooling flow outwardly from the outlet (178;278;378;478;578;678) and into a gas path such that formation of kidney vortices in the cooling flow is reduced.

14. The method as recited in claim 13, wherein the gas turbine engine component (161;261) is an airfoil (162), the airfoil including an airfoil section (162B) extending from a platform; and
wherein the at least one cooling passage (174;274;374;474;574;674;774) defines a passage axis (PA) between the inlet (176;276) and the outlet (178;278;378;478;578;678), and the at least one cooling passage (174;274;374;474;574;674;774) is arranged such that a projection of the passage axis (PA) is non-orthogonal to a reference plane (RF1) defined by a localized region of the external wall surface (261C).

15. The method as recited in claim 13 or 14, wherein the at least one cooling passage (174;274;374;474;574;674;774) includes an intermediate section (575;675) that interconnects the inlet (176;276) and the outlet (178;278;378;478;578;678), and further comprising communicating the cooling flow across a plurality of ridges (582;682) defined in the intermediate section (575;675), the plurality of ridges extending from the plurality of crenellation features (280;380;480;580;680;780) in a direction towards the inlet (176;276).
